# EUROPÄISCHE PATENTANMELDUNG

(11) **EP 1 316 448 A2**
(43) Veröffentlichungstag der Anmeldung: **04.06.2003**
(21) Anmeldenummer: 02022491.1
(22) Anmeldetag: 05.10.2002
(51) Int. Cl.: B60G 17/015

(54) **Abstützsystem mit höherverstellbarer Hubstütze und Verfahren zum Nivellieren von Fahrzeugen unter Verwendung des Abstützsystems**

(30) Priorität: 28.11.2001 DE 10158391
(71) Anmelder: Goldschmitt techmobil AG, 74746 Höpfingen (DE)
(72) Erfinder: Mairon, Markus, Dipl.-Ing., 74746 Höpfingen (DE)
(74) Vertreter: Pöhner, Wilfried, Dr.

(57) **Zusammenfassung**

Bei einem Abstützsystem für Fahrzeuge mit Hubstützen, die am Fahrzeugrahmen angebracht sind, jeweils mittels eines Hydraulikzylinders betrieben werden und auf denen das Fahrzeug bei Stillstand abstellbar ist, wird vorgeschlagen, jeder der vier Fahrzeugseiten wenigstens zwei Hubstützen, vorzugsweise je eine im Bereich der Fahrzeugecken, zuzuordnen und die Hydraulikzylinder der jeweils einer Fahrzeugseite zugeordneten Hubstützen, vorzugsweise jeweils mittels einer Hydraulikleitung, gemeinsam zu beaufschlagen.

## Beschreibung

Die Erfindung betrifft ein Abstützsystem für Fahrzeuge mit Hubstützen, die am Fahrzeugrahmen angebracht sind, jeweils mittels eines Hydraulikzylinders betrieben werden und auf denen das Fahrzeug bei Stillstand abstellbar ist. Sie umfaßt ebenfalls ein Verfahren zum Nivellieren von Fahrzeugen mit hydraulisch betriebenen Hubstützen.

Derartige Abstützsysteme werden beispielsweise bei Sonderfahrzeugen, Wechselpritschen, Wohnwagen oder Wohnmobilen eingesetzt. Sie dienen dazu, das Fahrzeug während des Ruhezustandes abzustützen oder gänzlich zu tragen und dabei eine Ausrichtung des Fahrzeuges in die Horizontale zu ermöglichen.

Systeme nach dem Stand der Technik weisen in der Regel je eine hydraulische Hubstütze in jeder Ecke des Fahrzeuges auf. Zum Anheben oder Nivellieren des Fahrzeuges wird nacheinander jede der Hubstützen hydraulisch beaufschlagt und dadurch das Fahrzeug Ecke für Ecke angehoben. Dabei kann der Hubvorgang so durchgeführt werden, daß das Fahrzeug an der jeweiligen Ecke jeweils in einem Arbeitsvorgang bis zur Endhöhe angehoben wird, oder an jeder der Ecken in mehreren Durchgängen schrittweise bis zur endgültigen Höhe hochgefahren wird. Dabei wird letztere Vorgehensweise insbesondere dann angewandt, wen es sich um Fahrzeuge mit schweren Aufbauten oder schweren Lasten handelt.

Die genannten Abstützsysteme weisen jedoch einen erheblichen Mangel auf, der darin besteht, daß das sukzessive Anheben des Fahrzeuges im Bereich von dessen Ecken zu einer erheblichen Belastung des Fahrzeugrahmens führt. Bei großen pro Fahrzeugecke notwendigen Hüben führen diese hohen Belastungen mitunter auch dazu, daß sich der Rahmen verzieht und dadurch dauerhafte Schäden davonträgt. Darüber hinaus ist das Anheben des Fahrzeuges in Schritten, die wenigsten einen Durchgang für alle Ecken umfassen, auch wenig komfortabel.

Vor diesem Hintergrund hat sich die Erfindung die Aufgabe gestellt, eine Abstützsystem anzugeben, das die Nachteile bekannter Systeme vermeidet und mit wenigen Arbeitsschritten eine Ausrichtung des Fahrzeugs in die Horizontale ermöglicht, wobei der vorgesehene konstruktive Aufwand vergleichsweise gering ist. Darüber hinaus deckt das vorgeschlagene System auch den Fall ab, daß ein Fahrzeug parallel zu sich selbst anhebbar ist. Aufgabe der Erfindung ist es ebenfalls, ein vorteilhaftes Verfahren zum Nivellieren von Fahrzeugen mit hydraulisch betriebenen Hubstützen anzugeben.

Erfindungsgemäß wird diese Aufgabe hinsichtlich des Abstützsystems dadurch gelöst, daß
- jeder der vier Fahrzeugseiten wenigstens zwei Hubstützen, vorzugsweise je eine im Bereich der Fahrzeugecken, zugeordnet sind,
- und die Hydraulikzylinder der jeweils einer Fahrzeugseite zugeordneten Hubstützen, vorzugsweise jeweils mittels einer Hydraulikleitung, gemeinsam beaufschlagbar sind.

Hinsichtlich des Verfahrens werden folgende Verfahrensschritte vorgeschlagen:
a) Abstellen des Fahrzeuges
b) Auswahl der ersten anzuhebenden Fahrzeugseite
c) Beaufschlagung der dieser Seite zugeordneten hydraulischen Hubstützen
   - wobei die Stützen in der Regel zunächst zueinander nicht koordiniert ausfahren, bis alle Hubstützen der betreffenden Fahrzeugseite Bodenkontakt haben
   - und anschließend synchron zueinander weiter ausfahren
d) Beendigung der Beaufschlagung der dieser Seite zugeordnete hydraulischen Hubstützen dann, wenn die an die vorliegende Fahrzeugseite angrenzenden weiteren Fahrzeugseiten eine horizontale Ausrichtung eingenommen haben
e) Wiederholung der Schritte c) und d) an der weiteren Fahrzeugseite, welche die von beiden weiteren Fahrzeugseiten tiefer liegende ist.

Das vorgeschlagene Abstützsystem geht von an sich bekannten hydraulischen Hubstützen aus, die am Rahmen eines Fahrzeugs angebracht sind. Hubstützen dieser Art weisen einen in der Regel einfach wirkenden, d.h. nur von einer Kolbenseite her hydraulisch beaufschlagbaren, Hydraulikzylinder auf. In Abweichung zum Stand der Technik werden diese hydraulischen Elemente jedoch nicht einzeln beaufschlagt, sondern die Hydraulikzylinder der jeweils einer Fahrzeugseite zugeordneten Hubstützen einer gemeinsamen Beaufschlagung unterzogen. Vorzugsweise ist hierfür eine die jeweiligen Hydraulikzylinder verbindende Hydraulikleitung vorgesehen.

Diese Ausgestaltung des Abstützsystems ermöglicht eine vorteilhafte Verfahrensweise gemäß vorgeschlagenem Verfahren beim Abstützen und Nivellieren von Fahrzeugen. Überträgt man die o. g. Verfahrensschritte auf ein Fahrzeug, das nach dem Abstellen beispielsweise nach vorne und gleichzeitig nach rechts tiefer hängt, dann ergibt sich bei zwei Hubstützen pro Fahrzeugseite folgender Ablauf beim Ausrichten des Fahrzeugs in eine waagrechte Position:

In einem ersten Verfahrensschritt wird die rechte Fahrzeugseite einem Hubvorgang unterzogen. Hierbei werden die dieser Fahrzeugseite zugeordneten Hubstützen hydraulisch beaufschlagt. Dies führt dazu, daß jede der an vorliegender Fahrzeugseite angebrachte Hubstütze beginnt auszufahren. Im allgemeinen verläuft dieser Vorgang ohne eine Koordination zwischen beiden Stützen ab, so daß in der Regel eine der Stützen vor der anderen den Boden erreicht. In diesem Fall verharrt die eine Stütze am Boden, während die andere weiter ausfährt, bis auch sie den Boden erreicht. Ab diesem Zeitpunkt fahren beide Stützen synchron zueinander aus und heben dabei, einer wesentlichen Überlegung der Erfindung entsprechend, das Fahrzeug auf der betrachteten Seite gleichmäßig an. Der Vorgang wird solange aufrecht erhalten bis die Vorder- und Hinterseite des Fahrzeugs eine horizontale Ausrichtung einnimmt.

Anschließend wird die gemäß Vorgabe tiefer hängende Vorderseite des Fahrzeugs einem Hubvorgang unterzogen. Hierbei werden analog zu dem beschriebenen Vorgang die an der Vorderseite des Fahrzeugs liegenden Hubstützen hydraulisch beaufschlagt. Dieser Vorgang führt nach dem Erreichen des Bodens durch die Hubstützen zu einem gleichmäßigen Anheben des Fahrzeuges an dessen linken und rechten vorderen Ende. Der Hubvorgang wird beendet, wenn die Längsseiten des Fahrzeuges eine horizontale Ausrichtung einnehmen. Damit ist aber bereits eine Nivellierung des Fahrzeuges erreicht, das Fahrzeug hat insgesamt eine horizontale Ausrichtung eingenommen.

Ein Vorteil des Abstützsystems gemäß vorliegender Erfindung ist in dessen einfachen Aufbau zu sehen. Die gegenüber dem Stand der Technik zusätzlich erforderlichen Mittel beschränken sich auf wenige konstruktiven Maßnahmen, welche eine gemeinsame Beaufschlagung der jeweils einer Fahrzeugseite zugeordneten Hydraulikzylinder bewirken.

Trotz einfacher Bauart bringt das erfindungsgemäße Abstützsystem zahlreiche Verbesserungen gegenüber herkömmlichen Systemen mit sich. So erfordert das vorgeschlagene Verfahren zur Nivellierung eines Fahrzeuges nur zwei Arbeitsschritte, was im Vergleich zu den Verfahren mit Hubstützen nach dem Stand der Technik einen wesentliche Erhöhung des Komforts und eine erhebliche Reduzierung des Arbeitsaufwands bedeutet. Ein wesentlicher Vorteil des vorgeschlagenen Systems und Verfahrens liegt auch darin begründet, daß der Hubvorgang jeweils an einer ganzen Fahrzeugseite ausgeführt wird. Hierdurch werden Belastungen des Fahrzeuges im Bereich einer Fahrzeugecke von vorne herein vermieden, dadurch bedingte Beschädigungen des Fahrzeugrahmens a priori ausgeschlossen.

Der weiteren Verbesserung des Komforts dient auch eine Weiterbildung des vorgeschlagenen Abstützsystems. Bei dieser Ausbildung ist die Beaufschlagung der Hydraulikzylinder der jeweils einer Fahrzeugseite zugeordneten Hubstützen mittels einer Fernbedienung auslösbar. Die Bedienelemente der Fernbedienung sind dabei vorzugsweise im Fahrerhaus oder einer zentralen Kommandostelle installiert. Vorgeschlagen wird auch eine sprechenden Beschriftung der Bedienelemente, wie rechts anheben, links anheben, vorne anheben, hinten anheben.

Bei der technischen Ausführung der Mittel, welche die Hydraulikzylinder der jeweils einer Seite zugeordneten Hubstützen ansteuern, sind prinzipiell zahlreiche Möglichkeiten gegeben. Im Rahmen der Erfindung wird jedoch eine Ausführung bevorzugt, bei welcher eine hydraulische Ringleitung vorgesehen ist, an die die einzelnen Hydraulikzylinder jeweils über ein Ventil angeschlossen sind. Bei einer Ansteuerung der einer Seite zugeordneten Hubstützen werden dann die Ventile der entsprechenden Hydraulikzylinder geöffnet und somit diese Zylinder mit der Ringleitung verbunden. Eine Beaufschlagung der Ringleitung an deren Anfang oder Ende führt dann gleichzeitig zu einer Beaufschlagung der Hydraulikzylinder der einer Seite zugeordneten Hubstützen.

Die vorgeschlagene Lösung ermöglicht mit geringem technischen Aufwand in vorteilhafter Weise die wahlfreie Ansteuerung von Gruppen von Hubstützen. Dabei kann die Anzahl der zu einer Gruppe zugehörigen Hubstützen prinzipiell von einer bis zu allen Hubstützen des Fahrzeugs reichen. Bei vorliegender Ausführung umfassen die Gruppen vorzugsweise jeweils zwei Hubstützen, wobei jede im Bereich einer Fahrzeugecke angebracht ist. Bei weiter unten dargelegten weiteren Ausführungsformen ist die Anzahl der zu einer Gruppe gehörigen Hubstützen jedoch größer als zwei.

Bei einer bevorzugten Ausführungsform weisen die Hubstützen jeweils einen Hydraulikzylinder mit beidseitig beaufschlagbarem Kolben auf. Diese Ausführung ermöglicht einerseits ein Nivellieren eines Fahrzeuges, indem gemäß oben beschriebenem Verfahren die Kolbenseiten beaufschlagt werden, die zum Ausfahren der Hubstütze führen. Andererseits läßt sich durch Beaufschlagen der anderen Kolbenseite auf einfache Weise ein Einfahren der Stützen nach Beendigung der Stillstandzeit des Fahrzeuges herbeiführen. Die Beaufschlagung erfolgt in diesem Fall zweckmäßiger Weise so, daß die Hydraulikzylinder aller Stützen gleichzeitig unter Druck gesetzt werden.

Für manche Anwendungen des vorgeschlagenen Abstützsystems ist es von Vorteil, wenn an einer Fahrzeugseite mehr als zwei Hubstützen vorgesehen sind. Solche Anwendungen liegen beispielsweise vor, wenn es sich um sehr lange oder schwere Fahrzeuge handelt. Auch in diesem Fall werden die jeweils einer Fahrzeugseite zugeordneten Hubstützen erfindungsgemäß gemeinsam beaufschlagt. Mit der oben vorgeschlagenen Ringleitung, an welche die einzelnen Hydraulikzylinder jeweils mittels eines Ventils angeschlossenen sind, kann dieser Fall ebenfalls sehr einfach abgedeckt werden. Alle einer Seite zugeordneten Hubstützen bewegen sich bei einer Beaufschlagung der Ringleitung zunächst unabhängig von einander soweit, bis jede von ihnen Bodenkontakt hat, um dann in einer zueinander synchronen Bewegung das Fahrzeug auf der betreffenden Seite anzuheben.

Eine weitere Ausführungsform des Abstützsystems ist ebenfalls dadurch gekennzeichnet, daß gleichzeitig mehr als zwei Hubstützen angesteuert werden. Gemäß einem Merkmal der Erfindung ist bei dieser Lösung vorgesehen, daß die Hydraulikzylinder der jeweils zwei gegenüberliegenden Fahrzeugseiten zugeordneten Hubstützen gemeinsam beaufschlagbar sind. Die technische Umsetzung dieser Aufgabe erfolgt zweckmäßig ebenfalls mittels der angeführten Ringleitung. Diese Ausführung des Abstützsystems führt dazu, daß bei Beaufschlagung der genannten Hydraulikzylinder das Fahrzeug parallel zu sich selbst angehoben oder abgesenkt wird, je nachdem welche Kolbenseite der einzelnen Hydraulikzylinder beaufschlagt wird. Damit ist insbesondere nach Durchführung einer Nivellierung in vorteilhafter Weise die Möglichkeit gegeben, die Höhe des Fahrzeuges über Grund nach oben oder unten zu korrigieren.

Die Ausstattung der Hubstützen mit je einem doppelt wirkenden Hydraulikzylinder bietet, wie beschrieben, die Möglichkeit, die ausgefahrenen Stützen durch Beaufschlagung der entsprechenden Kolbenseite auch hydraulisch einzufahren. Für Anwendungsfälle, in denen die nach dem Einfahren eingenommene Position der Hubstützen nicht ausreichend ist, werden Hubstützen vorgeschlagen, die jeweils zwischen zwei Endpositionen verschwenkbar sind. Stützen dieser Art kommen insbesondere bei Campingwagen oder Wohnmobilen zum Einsatz. Dabei entspricht die eine Endposition der Betriebsposition und weist eine vertikale Ausrichtung der Hubstützen auf, während in der anderen Endposition die Hubstützen eingefahren sind und vorzugsweise horizontal liegen. Die horizontale Ausrichtung ermöglicht in vorteilhafter Weise eine Platz sparende Verwahrung der Hubstützen während der Fahrt.

Weitere Einzelheiten, Merkmale und Vorteile der Erfindung lassen sich dem nachfolgenden Teil der Beschreibung entnehmen. In diesem Teil wird das Verfahren zum Nivellieren von Fahrzeugen gemäß vorliegender Erfindung anhand einer Zeichnung näher erläutert. Die wiedergegebenen Figuren zeigen in stark vereinfachter Darstellung die Position des Fahrzeugrahmens zu verschiedenen Zeitpunkten des Verfahrens. Es zeigen
- Figur 1:: Ausgangslage des Fahrzeugrahmens
- Figur 2:: Fahrzeugrahmen nach dem ersten Hubschritt
- Figur 3:: Fahrzeugrahmen nach dem zweiten Hubschritt

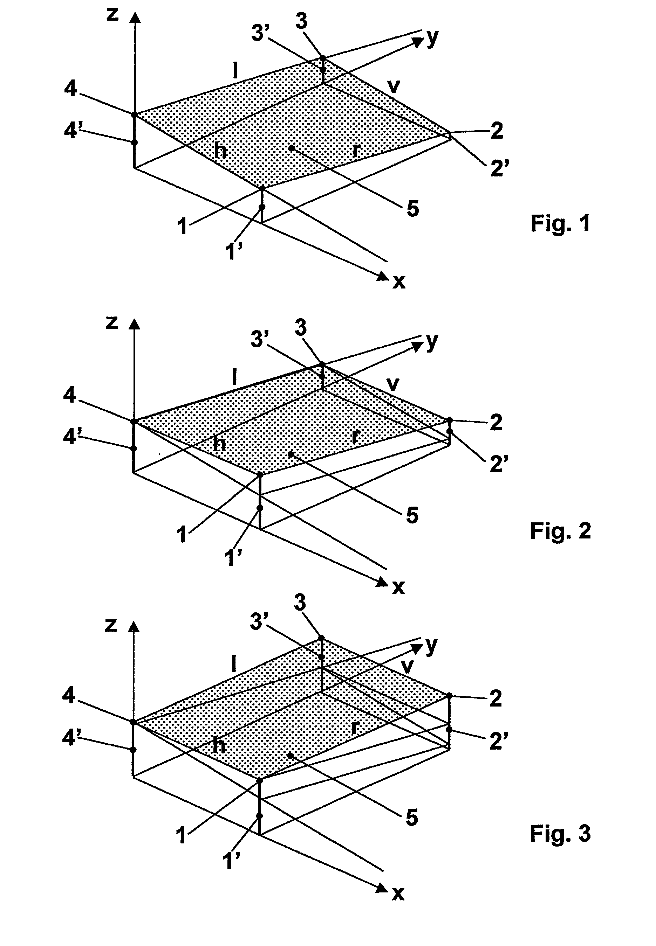

In Figur 1 - 3 ist jeweils ein durch die x-, y- und z-Achse aufgespanntes kartesisches Achsenkreuz und ein darin positioniertes Rechteck wiedergegeben, das durch die vier Eckpunkte 1 - 4 gekennzeichnet ist. Das Rechteck dient als zeichnerischer Ersatz für einen Fahrzeugrahmen 5, wobei die Eckpunkte 1 - 4 die vier Ecken es Rahmens und die Kennzeichen r, v, I und h jeweils die **r**echt**e**, **v**ordere, **l**inke und **h**intere Seite des Rahmens 5 ausweisen. Wie der Zeichnung zu entnehmen ist, weist der Rahmen 5 eine Schieflage auf, gegenüber der horizontalen xy-Ebene ist er nach vorne und gleichzeitig nach rechts geneigt. Die Abstände der vier Ecken gegenüber der horizontalen Ebene sind durch die Kennziffern 1' - 4' bezeichnet. Sie symbolisieren gleichzeitig die Länge der in den Ecken des Fahrzeugrahmens angebrachte Hubstützen nach deren Ausfahrt bis zum Kontakt mit dem Boden, der ebenfalls durch die xy-Ebene symbolisiert wird. Die Position des Vierecks in Figur 1 gibt die Ausgangslage des Rahmens 5 vor Durchführung der Nivellierung wieder.

Im ersten Hubschritt wird die mit r gekennzeichnete rechte Seite des Fahrzeugrahmens 5 angehoben. Hierbei werden die dieser Fahrzeugseite zugeordneten Hubstützen 1', 2' hydraulisch beaufschlagt. Dies führt dazu, daß alle Stützen 1', 2' soweit ausfahren, bis Kontakt zum Boden xy erreicht ist. Daran anschließend bewegen sich die Hubstützen synchron zueinander und heben dabei die rechte Seite des Fahrzeugrahmens 5 an. Bei diesem Vorgang durchläuft der Rahmen eine Position, in welcher dessen vordere und hintere Seite v und h jeweils eine horizontale Ausrichtung einnehmen. Dieser Bewegungsaugenblick ist in Figur 2 festgehalten, er kennzeichnet das Ende des ersten Hubschrittes.

Im daran anschließenden Hubschritt wird die vordere Seite v angehoben, wobei analog zu dem beschriebenen Vorgang die dieser Rahmenseite zugeordneten Hubstützen 2', 3' hydraulisch beaufschlagt werden. Dieser Vorgang führt nach Erreichen des Bodens durch Stütze 3' zu einem gleichmäßigen Anheben der Punkte 2, 3 des Rahmens. Der Vorgang wird beendet, sobald die linke und rechte Rahmenseite l und r eine horizontale Ausrichtung einnehmen. Mit Abschluß dieses Vorgangs nimmt der Fahrzeugrahmen 5 insgesamt eine horizontale Lage ein. Die Nivellierung des Fahrzeugs ist somit abgeschlossen, ihre Durchführung erforderte insgesamt nur zwei Hubschritte.

## Patentansprüche

1. Abstützsystem für Fahrzeuge mit Hubstützen (1' - 4'), die am Fahrzeug rahmen (5) angebracht sind, jeweils mittels eines Hydraulikzylinders betrieben werden und auf denen das Fahrzeug bei Stillstand abstellbar ist,
**dadurch gekennzeichnet, daß**
- jeder der vier Fahrzeugseiten (r bzw. v bzw. I bzw. h) wenigstens zwei Hubstützen (1', 2' bzw. 2', 3' bzw. 3', 4' bzw. 4', 1')
- vorzugsweise je eine im Bereich der Fahrzeugecken, zugeordnet sind,
- und die Hydraulikzylinder der jeweils einer Fahrzeugseite zugeordneten Hubstützen (1', 2' bzw. 2', 3' bzw. 3', 4' bzw. 4', 1')
- vorzugsweise mittels derselben Hydraulikleitung, gemeinsam beaufschlagbar sind.

2. Abstützsystem für Fahrzeuge nach Anspruch 1, **dadurch gekennzeichnet, daß**
- die Beaufschlagung der Hydraulikzylinder der jeweils einer Fahrzeugseite zugeordneten Hubstützen (1', 2' bzw. 2', 3' bzw. 3', 4' bzw. 4', 1')
mittels einer Fernbedienung auslösbar ist,
- deren Bedienelemente vorzugsweise im Fahrerhaus oder einer zentralen Kommandostelle installiert sind.

3. Abstützsystem für Fahrzeuge nach Anspruch 1, **dadurch gekennzeichnet, daß**
- die genannte Hydraulikleitung eine Ringleitung ist,
- und die einzelnen Hydraulikzylinder über je ein Ventil an die Ringleitung angeschlossen sind.

4. Abstützsystem für Fahrzeuge nach Anspruch 1, **dadurch gekennzeichnet, daß**
- die Hubstützen jeweils einen Hydraulikzylinder mit beidseitig beaufschlagbarem Kolben aufweisen.

5. Abstützsystem für Fahrzeuge nach Anspruch 1, **dadurch gekennzeichnet, daß**
- an einer Fahrzeugseite mehr als zwei Hubstützen angebracht sind.

6. Abstützsystem für Fahrzeuge nach Anspruch 1, **dadurch gekennzeichnet, daß**
- die Hydraulikzylinder der jeweils zwei gegenüberliegenden Fahrzeugseiten zugeordneten Hubstützen (1', 2', 3', 4') gemeinsam beaufschlagbar sind.

7. Abstützsystem für Fahrzeuge nach Anspruch 1, **dadurch gekennzeichnet, daß**
- die Hubstützen jeweils zwischen zwei Endpositionen verschwenkbar sind
- wobei die eine Endposition der Betriebsstellung entspricht und eine vertikale Ausrichtung der Hubstützen aufweist,
- während in der anderen Endposition die Hubstützen eingefahren sind und vorzugsweise horizontal liegen.

8. Verfahren zum Nivellieren von Fahrzeugen unter Verwendung des Abstützsystems nach einem der vorangehenden Ansprüche, **gekennzeichnet durch** folgende Verfahrensschritte
f) Abstellen des Fahrzeuges
g) Auswahl der ersten anzuhebenden Fahrzeugseite
h) Beaufschlagung der dieser Seite zugeordneten hydraulischen Hubstützen
- wobei die Stützen in der Regel zunächst zueinander nicht koordiniert ausfahren, bis alle Hubstützen der betreffenden Fahrzeugseite Bodenkontakt haben
- und anschließend synchron zueinander weiter ausfahren
i) Beendigung der Beaufschlagung der dieser Seite zugeordnete hydraulischen Hubstützen dann, wenn die an die vorliegende Fahrzeugseite angrenzenden weiteren Fahrzeugseiten eine horizontale Ausrichtung eingenommen haben
j) Wiederholung der Schritte c) und d) an der weiteren Fahrzeugseite, welche die von beiden weiteren Fahrzeugseiten tiefer liegende ist.
